# EUROPÄISCHE PATENTSCHRIFT

(11) **EP 3 198 183 B1**
(45) Veröffentlichungstag und Bekanntmachung des Hinweises auf die Patenterteilung: **24.07.2019**
(21) Anmeldenummer: 15767469.8
(22) Anmeldetag: 22.09.2015
(51) Int. Cl.: F16L 43/00, F15D 1/04, B65G 53/52

(54) **STRÖMUNGSFÜHRENDES BAUTEIL**
FLOW-CONDUCTING COMPONENT
COMPOSANT DE GUIDAGE DE L'ÉCOULEMENT

(30) Priorität: 26.09.2014 DE 102014219557
(43) Veröffentlichungstag der Anmeldung: 02.08.2017
(73) Patentinhaber: KSB SE & Co. KGaA, 67227 Frankenthal (DE)
(72) Erfinder: SALOMON, Kai, 67227 Frankenthal (DE); WILL, Björn, 67227 Frankenthal (DE)
(86) Internationale Anmeldenummer: PCT/EP2015/071672
(87) Internationale Veröffentlichungsnummer: WO 2016/046174

(56) Entgegenhaltungen:
- WO-A1-98/15483
- WO-A2-97/19286

## Beschreibung

Die Erfindung betrifft ein strömungsführendes Bauteil, sowie ein Verfahren zur Herstellung eines strömungsführenden Bauteils.

Strömungsführende Bauteile sind in verschiedenen Ausführungsformen bekannt. Je nach Einsatzbedingungen, also Arbeitsdruck, Fördermedium, Medientemperatur oder ähnlichem, ist das Bauteil aus speziellen Materialien gefertigt. Der statische Aufbau des Gehäuses ist ebenfalls stark vom Einsatzgebiet abhängig.

Die vorliegende Erfindung betrifft die geometrische Ausgestaltung eines strömungsführenden Bauteils, insbesondere die geometrische Ausgestaltung eines Bereichs, in dem eine Richtungsänderung der Strömung bewirkt wird.

Eine einfache Art eines strömungsführenden Bauteils durch das eine Richtungsänderung bei der Strömung hervorgerufen wird ist ein sogenannter Rohrkrümmer, Rohrknie oder Rohrbogen. Ein solcher Bogen kann die Richtung einer Strömung in einem Rohr gezielt verändern, wobei der Bogen meist als Kreisbogenausschnitt aus einem Rohrstück hergestellt ist, das bei einem Kreisradius r eine Ablenkung der Strömung um den Mittelpunktswinkel α erwirkt. Aus der WO 98/15483 A1 ist ein Bogen mit sich ändernden Krümmungsradien bekannt.

Abweichend vom Kreisbogenausschnitt wird beispielsweise durch die WO 2013 017 308 A2 oder die GB 486 991 A vorgeschlagen, dass der Krümmer einen expliziten Einlass und einen Auslass erhält, die Symmetrie des Rohrstücks bezüglich der Durchflussrichtung also aufgehoben wird.

Die WO 2013 017 308 A2 lehrt einen Krümmer mit stetigem Radiusverlauf zur Richtungsänderung bei einer Strömung zu verwenden, um die angreifenden Kräfte ebenfalls stetig zu ändern und keine abrupten Richtungsänderungen vorzusehen. Die Herstellung dieses Strömungsführenden Bauteils ist jedoch sehr aufwändig.

Aufgabe der Erfindung ist es ein Verfahren zur Gestaltung der geometrischen Ausgestaltung eines strömungsführenden Bauteils zu schaffen, das eine energiesparende Richtungsänderung um einen Winkel in einer Strömung bewirkt und einfach herstellbar ist.

Diese Aufgabe wird dadurch gelöst, dass mit Hilfe von Dreiecken eine Kontur konstruiert wird, wobei in einem ersten Schritt die Fließrichtung der Strömung in dem Bauteil festgelegt wird, in einem zweiten Schritt die Winkelhalbierende des Winkels ermittelt wird, wobei entlang dieser Winkelhalbierenden ein erster Punkt bestimmt wird, wobei jeweils ein Lot von einem der Bereiche, die den Winkel bilden, durch den ersten Punkt gefällt wird, wobei in einem dritten Schritt durch den ersten Punkt an das jeweilige Lot eine Gerade mit einem zweiten Winkel von 45° angelegt wird, wobei durch den Schnitt dieser Geraden mit den jeweiligen Bereichen jeweils eine Strecke festgelegt wird, deren jeweilige Mitten zweite Punkte festlegen, wobei in einem vierten Schritt an den in der festgelegten Fließrichtung befindlichen zweiten Punkt eine Gerade mit einem dritten Winkel von 22,5° an die Strecke angelegt wird, die den Bereich in einem dritten Punkt schneidet, wobei in einem fünften Schritt an einem vierten Punkt, welcher der Mitte der Strecke zwischen zweitem und drittem Punkt entspricht, eine Gerade mit einem vierten Winkel von 12,25° an die Strecke angelegt wird, die den Bereiche in Fließrichtung in einem fünften Punkt schneidet, wobei die einhüllende dieser Konstruktion die geometrische Ausgestaltung der geometrischen Kontur vorgibt.

Von Vorteil ist dabei, dass die Konstruktion mit einfachen Mitteln ermittelt werden kann. Ebenso lassen sich die einfachen Formen mit geringem Aufwand in ein konkretes Produkt umsetzen. Die Bearbeitung eines nach diesem Verfahren hergestellten Bauteils ist durch die einfache Kontur sehr unkompliziert, da die Krümmung aus wenigen geraden Abschnitten zusammengesetzt ist.

Die Kontur bietet den Vorteil, dass sie überall dort, wo sich in einem klassischen Rohrkrümmer der als Bogen oder Knie ausgeführt ist, durch die Unterschiede der Fließgeschwindigkeit im Bereich der Richtungsänderung Ablösungsgebiete ausbilden, die Geometrie so verändert ist, dass die Strömungsverluste reduziert werden.

In einer weiteren Ausgestaltung des erfindungsgemäßen Verfahrens wird die Kontur symmetrisch konstruiert. Die oben dargestellte Konstruktion sieht eine Hintereinanderreihung der Dreiecke in Strömungsrichtung vor. Dies kann auch symmetrisch, also zusätzlich entgegen der Strömungsrichtung ausgeweitet werden. Das Bauteil kann dann in beide Richtungen mit den gleichen Vorteilen durchströmt werden.

Die Erfindung beschreibt weiter ein strömungsführendes Bauteil, dessen Geometrie nach dem beschriebenen Verfahren konstruiert ist. Dieses Bauteil ermöglicht auf einfache vorteilhafte Weise die Richtungsänderung der Fließgeschwindigkeit, beispielsweise als Rohrkrümmer, also als 90° Bogen in einem Rohr, bereitzustellen, wobei dieser einfach zu konstruieren und herzustellen ist.

Besonders vorteilhaft ist es, wenn in der Strömung zusätzlich Flügel angeordnet sind. Diese Flügel, auch Einbauten genannt, sind beispielsweise einfache Leitbleche, die in Strömungsrichtung ausgerichtet sind und dabei wenig Widerstand bieten. Sie verbessern die Strömung in einem Krümmer deutlich. Die Flügel stören die aufgrund der Geschwindigkeitsdifferenzen im Rohr entstehenden Querströmungen und verringern somit die Verluste. Die Geometrie des Flügels ist an die erfindungsgemäße Methode zur Konstruktion des Krümmers angelehnt.

Anhand eines Ausführungsbeispiels wird die Erfindung näher erläutert.

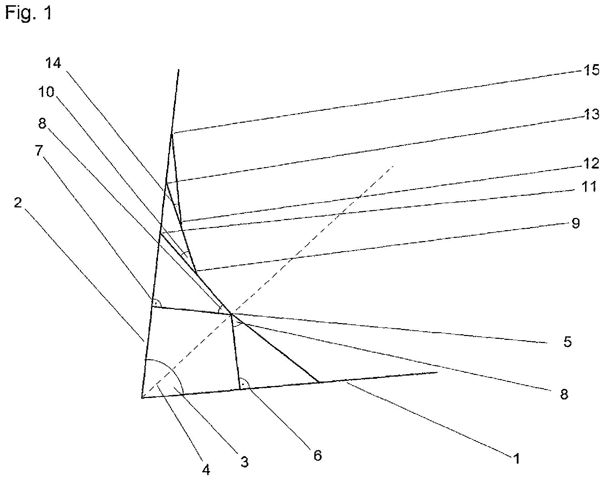

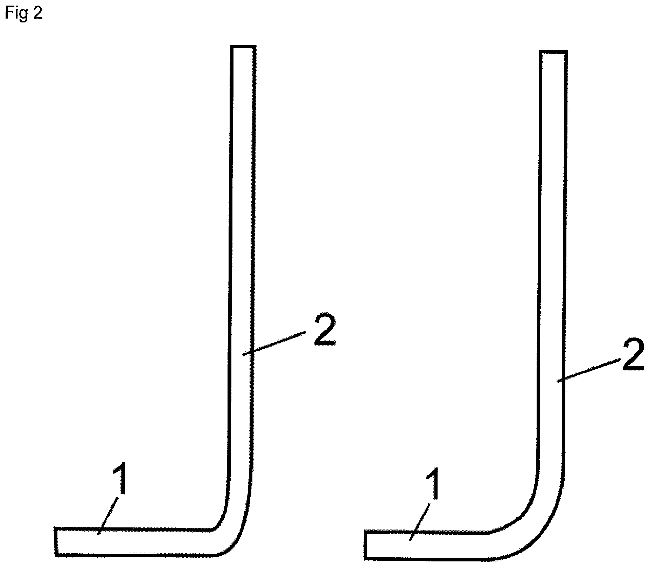

Die Fig. 1 zeigt die Konstruktionsmethode an einem beliebigen Krümmer und die Fig. 2 eine Gegenüberstellung eines herkömmlichen und eines erfindungsgemäßen Krümmers.

Die Figur 1 zeigt eine beliebige Stelle an der die Kontur eines Bauteils von einem ersten Bereich 1 unstetig in einen zweiten Bereich 2 übergeht, wobei die beiden Bereiche einen Winkel 3 einschließen. An dieser Unstetigkeitsstelle entwickeln sich erhebliche Störungen Strömungsverlauf, die durch einen geeignet konstruierten geometrischen Verlauf stark beeinflusst werden können. Traditionell wird hier ein sogenannter Rohrbogen oder ein Rohrknie vorgesehen, die entweder eine Rundung mit ausgewähltem Radius oder einen scharfen Winkel vorsehen.

Anhand verschiedener Beobachtungen in der Natur kann man eine Methode zur Gestaltung des Bogens entwickeln, die einfach zu konstruieren ist und dennoch die Strömungsverhältnisse an der Unstetigkeitsstelle so beeinflusst, dass die Verluste im Bogen bei minimalem Konstruktions- und Fertigungsaufwand sehr stark reduziert werden können. Hierzu wird zu dem Winkel 3 die Winkelhalbierende 4 konstruiert. Ein erster Punkt 5 wird auf dieser Winkelhalbierenden 4 ausgewählt. Durch diesen Punkt 5 werden senkrecht zu den Bereichen 1 und 2 die Geraden 6 und 7 gelegt. Zu diesen Geraden 6 und 7 werden im Punkt 5 unter dem Winkel 8 zu 45° Geraden angelegt, die die Bereiche 1 und 2 schneiden, wobei im Bereich 2 der Schnittpunkt 11 festgelegt wird. Die Strecke zwischen dem Punkt 5 und dem Punkt 11 wird halbiert, wodurch man den zweiten Punkt 9 erhält, an den unter dem Winkel 10 zu 22,5° eine Gerade angelegt wird, die den Bereich 2 in dem dritten Punkt 13 schneidet. Die Strecke zwischen dem Punkt 9 und dem Punkt 13 wird wieder halbiert, wodurch man den vierten Punkt 12 erhält, an den unter dem Winkel 14 zu 12,25° eine Gerade angelegt wird, die den Bereich 2 im fünften Punkt 15 schneidet. Die Einhü lende dieser Konstruktion ergibt eine Kontur.

Die vorgestellte Konstruktion geht von einer nicht symmetrischen Belastung eines Bauteils aus. Würde das Bauteil symmetrisch belastet, beispielsweise durch eine wechselweise vor/zurück Strömung, dann ließe sich die Konstruktion symmetrisch in Richtung des ersten Bereichs 1 auf analoge Weise ergänzen.

Die Fig. 2 zeigt den direkten Vergleich eines Krümmers mit herkömmlichem Radius ( rechts) und einem Krümmer mit erfindungsgemäßem Verlauf (links). Der erfindungsgemäße Verlauf ist aufgrund seiner Asymmetrie fest in einer Richtung einzubauen und zwar so, dass die Fließrichtung von einem ersten Bereich 1 zu einem zweiten Bereich 2 zeigt. Im direkten Vergleich sind die deutlich geringeren Abmessungen des erfindungsgemäßen Krümmers erkennbar. Die einfache erfindungsgemäße Konstruktion spart nicht nur Energie beim Umlenken der Strömung, sondern auch Bauraum und Material beim Fertigen des Krümmers.

**Bezugszeichenliste**

| | | | |
|---|---|---|---|
| 1 | Erster Bereich | 8 | Winkel zu 45° |
| 2 | Zweiter Bereich | 9 | zweiter Punkt |
| 3 | Winkel der Richtungsänderung | 10 | Winkel zu 22,5° |
| 4 | Winkelhalbierende | 11 | Schnittpunkt |
| 5 | erster Punkt (Schnittpunkt) | 12 | vierter Punkt |
| 6 | Rechter Winkel | 13 | dritter Punkt |
| 7 | Rechter Winkel (Schnittpunkt) | 14 | Winkel zu 12,25° |
| | | 15 | fünfter Punkt |

## Patentansprüche

1. Verfahren zur geometrischen Ausgestaltung eines strömungsführenden Bauteils, wobei das Bauteil eine Richtungsänderung bei einer Strömung mit einem Winkel (3) von einem ersten Bereich (1) zu einem zweiten Bereich (2) erwirkt,
wobei die Strömung in einem ersten Bereich (1) eine einlaufende Richtung und in einem zweiten Bereich eine auslaufende Richtung aufweist,
**dadurch gekennzeichnet, dass**
eine Konstruktion der Kontur mithilfe angenäherter Dreiecke vorgenommen wird, wobei
in einem ersten Schritt die Fließrichtung festgelegt wird,
in einem zweiten Schritt die Winkelhalbierende des Winkels (3) ermittelt wird,
wobei entlang dieser Winkelhalbierenden ein erster Punkt (5) bestimmt wird,
wobei jeweils ein Lot von einem der Bereiche (1,2), die den Winkel (3) bilden, durch den ersten Punkt (5) gefällt wird,
wobei in einem dritten Schritt durch den ersten Punkt (5) an das jeweilige Lot eine Gerade mit einem Winkel (8) von 45° angelegt wird,
wobei durch den Schnitt dieser Geraden mit den jeweiligen Bereichen (1, 2) jeweils eine Strecke festgelegt wird, deren jeweilige Mitten zweite Punkte (9) festlegen,
wobei in einem vierten Schritt an die zweiten Punkte (9) jeweils Geraden mit einem Winkel (10) von 22,5° an die Strecken angelegt werden, die die Bereiche (1, 2) in dritten Punkten (13) schneiden,
wobei in einem fünften Schritt an vierten Punkten (12), welche den Mitten der Strecken zwischen den zweiten und dritten Punkten entspricht, jeweils Geraden mit einem Winkel (14) von 12,25° an die Strecken angelegt werden, die die Bereiche (1, 2) in fünften Punkten (15) schneiden,
wobei die Einhüllende dieser Konstruktion die geometrische Ausgestaltung der geometrischen Kontur vorgibt.

2. Verfahren nach Anspruch 1 **dadurch gekennzeichnet, dass** die Kontur symmetrisch konstruiert wird.

3. Verfahren nach Anspruch 1 **dadurch gekennzeichnet, dass** die Kontur asymmetrisch konstruiert wird, insbesondere werden die Dreiecke in Fließrichtung konstruiert.

4. Strömungsführendes Bauteil, **dadurch gekennzeichnet, dass** die Geometrie des Bauteils nach dem in Anspruch 1, 2 oder 3 beschriebenen Verfahren konstruiert ist.

5. Strömungsführendes Bauteil nach Anspruch 4, **dadurch gekennzeichnet, dass** das Bauteil ein Rohrkrümmer ist.

6. Strömungsführendes Bauteil nach Anspruch 4 oder 5, **dadurch gekennzeichnet, dass** in der Strömung geeignete Vorrichtungen zur Verbesserung der Strömungsumlenkung angeordnet sind.

## Claims

1. Method for the geometric configuration of a flow-guiding component, wherein the component effects a change of direction of a flow with an angle (3) from a first region (1) to a second region (2), the flow in a first region (1) having an inflowing direction and in a second region having an outflowing direction,
**characterized in that**
a construction of the contour is undertaken with the aid of approximated triangles, wherein,
in a first step, the flow direction is established,
in a second step, the angle bisector of the angle (3) is determined, with a first point (5) being defined along this angle bisector and in each case a perpendicular from one of the regions (1, 2) which form the angle (3) being dropped through the first point (5),
wherein, in a third step, a straight line is taken through the first point (5) at an angle (8) of 45° to the respective perpendicular, a segment being established in each case by the intersection of these straight lines with the respective regions (1, 2), the respective centres of which segments establish second points (9),
wherein, in a fourth step, respective straight lines are taken to the second points (9) at an angle (10) of 22.5° to the segments, said straight lines intersecting the regions (1, 2) at third points (13),
wherein, in a fifth step, respective straight lines are taken to fourth points (12), which correspond to the centres of the segments between the second and third points, at an angle (14) of 12.25° to the segments, said straight lines intersecting the regions (1, 2) at fifth points (15),
wherein the envelope of this construction defines the geometric configuration of the geometric contour.

2. Method according to Claim 1, **characterized in that** the contour is constructed in a symmetrical manner.

3. Method according to Claim 1, **characterized in that** the contour is constructed in an asymmetrical manner, in particular the triangles being constructed in the flow direction.

4. Flow-guiding component, **characterized in that** the geometry of the component is constructed according to the method described in Claim 1, 2 or 3.

5. Flow-guiding component according to Claim 4, **characterized in that** the component is a tube angle fitting.

6. Flow-guiding component according to Claim 4 or 5, **characterized in that** suitable devices for improving the flow deflection are arranged in the flow.

## Revendications

1. Procédé pour la configuration géométrique d'un composant de guidage d'écoulement, dans lequel le composant provoque un changement de direction dans un écoulement avec un angle (3) d'une première région (1) à une seconde région (2), dans lequel l'écoulement présente dans une première région (1) une direction d'entrée et dans une seconde région (2) une direction de sortie, **caractérisé en ce que**
on effectue une construction du contour à l'aide de triangles par approximation, dans lequel dans une première étape on fixe la direction d'écoulement,
dans une deuxième étape on détermine la bissectrice de l'angle (3),
dans lequel on détermine un premier point (5) le long de cette bissectrice,
dans lequel on trace respectivement par le premier point (5) une perpendiculaire depuis une des régions (1, 2), qui forment l'angle (3),
dans lequel dans une troisième étape on trace par le premier point (5) une droite formant un angle (8) de 45° avec la perpendiculaire respective,
dans lequel on définit respectivement, par l'intersection de ces droites avec les régions respectives (1, 2), chaque fois un segment, dont le milieu respectif définit des deuxièmes points (9),
dans lequel dans une quatrième étape on trace par les deuxièmes points (9) respectivement des droites formant un angle (10) de 22,5° avec les segments, qui coupent les régions (1, 2) en des troisièmes points (13),
dans lequel dans une cinquième étape on trace par des quatrièmes points (12), qui correspondent aux milieux des segments entre les deuxièmes et troisièmes points, respectivement des droites formant un angle (14) de 12,25° avec les segments, qui coupent les régions (1, 2) en des cinquièmes points (15),
dans lequel l'enveloppe de cette construction prédéfinit la configuration géométrique du contour géométrique.

2. Procédé selon la revendication 1, **caractérisé en ce que** le contour est conçu de façon symétrique.

3. Procédé selon la revendication 1, **caractérisé en ce que** le contour est conçu de façon asymétrique, en particulier les triangles sont conçus dans la direction d'écoulement.

4. Composant de guidage d'écoulement, **caractérisé en ce que** la géométrie du composant est conçue selon le procédé décrit dans la revendication 1, 2 ou 3.

5. Composant de guidage d'écoulement selon la revendication 4, **caractérisé en ce que** le composant est un coude tubulaire.

6. Composant de guidage d'écoulement selon une revendication 4 ou 5, **caractérisé en ce que** des dispositifs appropriés pour améliorer la déviation de l'écoulement sont disposés dans l'écoulement.
